(19) **Europäisches Patentamt / European Patent Office / Office européen des brevets**

(11) **EP 2 205 455 B1**

(12) ## EUROPEAN PATENT SPECIFICATION

(45) Date of publication and mention
of the grant of the patent:
**27.07.2011 Bulletin 2011/30**

(21) Application number: **07820886.5**

(22) Date of filing: **03.10.2007**

(51) Int Cl.:
**B60C 15/06** $^{(2006.01)}$

(86) International application number:
**PCT/EP2007/060509**

(87) International publication number:
**WO 2009/043377 (09.04.2009 Gazette 2009/15)**

(54) **TIRE HAVING AN IMPROVED BEAD STRUCTURE**

REIFEN MIT EINER VERBESSERTEN WULSTSTRUKTUR

PNEU DOTÉ D'UNE STRUCTURE DE TALON AMÉLIORÉE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**14.07.2010 Bulletin 2010/28**

(73) Proprietor: **Pirelli Tyre S.p.A.**
**20126 Milano (IT)**

(72) Inventors:
• **RAIA, Ciro**
  **I-20126 Milano (IT)**

• **CEREDA, Giuseppe**
  **I-20126 Milano (IT)**
• **CARRA, Alberto**
  **I-20126 Milano (IT)**
• **ASCANELLI, Alessandro**
  **I-20126 Milano (IT)**

(74) Representative: **Colombo, Stefano Paolo**
**MARCHI & PARTNERS S.r.l.**
**Via G.B. Pirelli, 19**
**20124 Milano (IT)**

(56) References cited:
**US-A- 4 953 605**

## Description

### Field of the invention

The present invention relates to a tire having an improved bead structure.

In particular, the present invention relates to a heavy load vehicle tire comprising an improved bead structure.

### Background of the invention

As it is known, a tire usually comprises a pair of bead structures, with each bead structure comprising at least one bead core and at least one bead filler; a carcass structure of a substantially toroidal shape, comprising at least one carcass ply usually including a plurality of reinforcing elements, extending between the bead structures, said carcass ply having its opposite lateral edges turned up around said bead core; a belt structure applied in a radially outer position with respect to said carcass structure; a tread band applied in a radially outer position with respect to said belt structure; and a pair of sidewalls applied laterally on opposite sides with respect to said carcass structure.

Both bead structures and sidewalls are subjected to a large bending deformation during the running of the tire under loading, in particular under the action of a large loading. In particular, because of said bending deformation, the generation of strains or the concentration of stresses at the end portions of the turned up carcass ply and at neighborhood thereof, may occur. As a result, there is a problem that formation of fatigue cracks may occur at the end portions of the turned up carcass ply which, because of repetitiveness of said bending deformation, may cause bead structure failure by the growth of such cracks. Moreover, said bending deformation may give rise to heat buildup that may lead to separation of the mutually adjacent tire structural elements present in the bead area, in particular of the turned up carcass ply from the adjacent structural elements of the tire. Consequently, the bead structure durability is lowered.

Attempts to solve the abovementioned drawbacks have been made in the art.

For example, European Patent Application EP 0 206 679 relates to a reinforced bead structure for a heavy duty tyre. The tyre comprises: a carcass ply of a radial or semiradial arrangement; a metallic cord reinforcing layer disposed at the axially outside of the turned up portion of the carcass ply; an inside reinforcing layer composed of fibre cords and disposed along the inside of the main portion of the carcass ply, and the outside reinforcing layer composed of fibre cords and arranged along the outside of the metallic cord reinforcing layer and the turned up portion. The above components satisfy certain equations between h1, h2, h3, h3' and h4, which are, respectively, the height of the outer end of the turned up portion, the height of the outer end of the metallic cord reinforcing layer, the height of the outer end of the outside reinforcing layer, the height of the outer end of the inside reinforcing layer and the height of the outer end of the turned up portion of the metallic reinforcing layer.

United States Patent US 4,227,563 relates to a heavy duty pneumatic tire which is provided with bead cores of symmetrical or asymmetrical polygonal cross-section. Extending radially outwardly therefrom are apex strips of a hard rubber compound which contact the bead cores along their radially outwardly oriented faces. The apex strips have a width at least as great as the width of the bead cores measured in a selected direction, and have a height of not more than 1.5 times the width of the bead cores. At least one ply of rubberized steel cord reinforced fabric forming a carcass has its radially inward ends wrapped about the bead cores to form turnups. Bead reinforcement strips are wrapped about the bead cores and extend radially outwardly beyond the terminal ends of the turnups. The terminal ends of turnups and the reinforcement strips are enveloped in cushion elements of a rubber material which are softer than the carcass ply and the apex strips. It is said that, residual forces in the turnups and the reinforcement strips can be absorbed readily by the cushion elements to reduce the occurrence of fatigue cracks in the beads.

United States Patent US 5,433,257 relates to heavy duty pneumatic radial tires with specified carcass turnup arrangement. The bead durability of the heavy duty pneumatic radial tire for truck and bus is improved by arranging a rubber stock composed of three rubbers A, B and C each having particular properties between a carcass ply and its turnup portion in the bead portion and/or rendering the turnup portion of the carcass ply in the bead portion into a particular arrangement.

United States Patent US 4,046,183 relates to a radial tire having a highly durable bead structure comprising a carcass ply having a high modulus of elasticity. The bead is constructed to satisfy the following conditions, i.e.:

$$h2 = (1/10 \text{ to } 1/2)h0, \text{ and}$$
$$d = (1/30 \text{ to } 1/5)D$$

where h0 is a vertical height of the upper end of a turn up portion of the carcass ply measured from a base of the bead, h2 is a vertical distance from the upper end of the turn up portion of the carcass ply to the upper end of an inner reinforcing cord layer after the tire has been mounted and inflated, d is an interlayer gauge of a space formed between the turn up portion of the carcass ply and an outer reinforcing cord layer and measured on a line passing through the upper end of the turn up portion of the carcass ply and perpendicular to the carcass ply and D is a thickness of that portion of the bead which is measured on said line. A rubber having a modulus of elasticity of 20 to 100 Kg/cm2 at 100% elongation is inserted into said space.

United States Patent US 4,953,605 discloses a tire comprising all the features of the preamble of claim1.

## Summary of the invention

The Applicant has faced the problem of providing a tire, in particular a heavy load vehicle tire, having an improved bead structure. Said kind of tire is, in fact, often used in presence of very large loads, namely it is subjected to loads at the limit with respect to those for which the tire itself has been designed. Consequently, it is desired to make a bead structure able to resist to said very large loads.

The Applicant has observed that, when the tire is subjected to said very large loads, the amplitude of the strain cycles to which the tire, in particular the bead area, is subjected because of bending deformation during running of the same, as well as the heat buildup mentioned above, remarkably increase, so remarkably increasing also the risk of fatigue cracks occurrence therein, as well as the risk of separation of mutually adjacent tire structural elements present in the bead area, which may cause a bead structure failure.

The Applicant has thus faced the problem of providing a tire, in particular a heavy load vehicle tire, wherein, in particular when the tire is subjected to very large loads, the generation of strains and the concentration of stresses, at the end portions of the turned up carcass ply and at the neighborhood thereof, are remarkably reduced.

The Applicant has found that it is possible to obtain a tire having the above characteristics by increasing the thickness of the antiabrasive layer portion placed in an axially outer position of a bead structure portion designed to be in contact with the tire rim, as well as by increasing the height of the end portions of the turned up carcass ply, as will be better specified hereinbelow.

However, the Applicant has noticed that a mere increasing of the thickness of the antiabrasive layer may cause movement of the crosslinkable elastomeric material forming said antiabrasive layer during moulding and vulcanization, which has to be as much as possible avoided.

The Applicant has found that the addition of reinforcing layer(s) in the axially outer portion of the bead area allows to counteracting the movement of the crosslinkable elastomeric material forming said antiabrasive layer both during moulding and vulcanization.

According to a first aspect, the present invention relates to a tire to be mounted on a rim, the tire comprising:

-   a pair of bead structures, said bead structures comprising at least one bead core and at least one bead filler;
-   a carcass structure comprising at least one carcass ply extending between said bead structures, the opposite lateral edges of said carcass ply being turned up around said bead cores;

-   a belt structure applied in a radially outer position with respect to said carcass structure;
-   a tread band applied in a radially outer position with respect to said belt structure;
-   a pair of sidewalls, each sidewall being applied laterally on opposite sides with respect to said carcass structure;
    wherein each one of said pair of bead structures comprises:
-   at least one first reinforcing layer which is wound around said turned up carcass ply so as to at least partially envelope said bead core and said bead filler;
-   at least one second reinforcing layer placed in an axially outer position with respect to said at least one first reinforcing layer;
-   at least one antiabrasive layer portion placed in an axially outermost position of a bead structure portion designed to be in contact with the rim;
    wherein:
-   said at least one antiabrasive layer portion has a thickness higher than or equal to about 3.5 mm, preferably of from about 4.0 mm to about 7.0 mm, said thickness being measured in correspondence of the bead core;
-   the end portion of said turned up carcass ply is placed at a height h1 which satisfies the following relation:

$$h1 = c1 \times h$$

wherein c1 is a number ranging from about 0.15 to about 0.50, preferably from about 0.20 to about 0.30, and wherein h is the radial distance, measured at the tire equatorial plane, from the tire nominal rim diameter to said at least one carcass ply.

For the aim of the present description and of the claims which follow, any "height" of a point in a tire radial section is determined as the distance in the radial direction from the nominal rim diameter to the point concerned.

For the aim of the present description and of the claims which follow the "tire equatorial plane" is the plane perpendicular to the tire rotational axis and containing the axial centerline of the tire.

Said "nominal rim diameter" is determined according to ETRTO Standard (2006), pg. 4-5.

The present invention may show one or more of the preferred characteristics hereinafter described.

According to one preferred embodiment, said tire is a heavy load vehicle tire.

For the aim of the present description and of the claims which follow, the expression "heavy load vehicle" means a vehicle of categories M2-M3, N2-N3 and O2~O4, according to ECE Consolidated Resolution of the Construction of Vehicles (R.E.3) (1997), Annex 7, pg. 52-59, "Classification and definition of power-driven vehicles and trailers", such as, for example, truck, tractor trailers, lorries, buses, large vans, and other similar vehicles.

According to a further preferred embodiment, said tire is a tube type tire, i.e. said tire comprises an innertube which provide the necessary impermeability to the inflation air of the tire, said innertube being placed in an inner position with respect to said at least one carcass ply. In the case of tube type tire, usually, the tire rim edge is inclined with respect to the tire equatorial plane at an angle of from about 5°±1°

According to one preferred embodiment, said at least one first reinforcing layer, also known as "flipper", comprises a plurality of reinforcing elements having a stiffness, measured on rubberized and vulcanized reinforcing elements, higher than or equal to about 100 tsu, preferably of from about 120 tsu to about 200 tsu.

Said stiffness is measured according to method BISFA - 95 (method E8 - Determination of Taber Stiffness) (1995), on samples of reinforcing elements previously embedded in the elastomeric material forming said at least one reinforcing layer and subjected to vulcanization.

According to a further preferred embodiment, the reinforcing elements of said at least one first reinforcing layer are made of metal, preferably of steel. More preferably, said reinforcing elements are steel cords.

According to one preferred embodiment, said at least one second reinforcing layer comprises a plurality of reinforcing elements having a stiffness, measured on rubberized and vulcanized reinforcing elements, higher than or equal to about 1 tsu, preferably of from about 3 tsu to about 25 tsu.

Said stiffness is measured according to method BISFA - 95 (method E8 - Determination of Taber Stiffness) (1995), as reported above.

The Applicant has found that the presence of said at least one second reinforcing layer, beside allowing to obtain an improved bead structure, allows to reduce or even to avoid movements of the crosslinkable elastomeric material forming the antiabrasive layer which may occur during tire manufacturing process, in particular during moulding and vulcanization, which negatively affect the final thickness of the antiabrasive layer (i.e. a desired thickness of the antiabrasive layer could not be obtained).

Moreover, the Applicant has also found that the lower stiffness of the reinforcing elements of said at least one second reinforcing layer allows to reduce or even to avoid undesired zones of concentration of stresses in the bead area, in particular at the end portion of the turned up carcass ply and at the neighborhood thereof, i.e. allows to distribute the stresses on the whole bead area.

Furthermore, the Applicant has also found that the lower stiffness of the reinforcing elements of said at least one second reinforcing layer allows to reduce the amplitude of the strain cycles to which the end portion of the turned up carcass ply and the neighborhood thereof are subjected during running of the tire. The amplitude reduction of the strain cycles is also advantageous to counteract heat buildup in the bead area. Moreover, the Applicant has also found that the lower stiffness of the reinforcing elements of said at least one second reinforcing layer allows to reduce the stiffness gradients in the axially outer direction of the tire bead area (e.g., the stiffness gradient between said at least one first reinforcing layer and the surrounding crosslinked elastomeric material).

According to one preferred embodiment, the reinforcing elements of said at least one second reinforcing layer are made of textile materials such as, for example, nylon, aramide, rayon, or mixtures thereof, preferably of nylon.

According to an alternative embodiment, the reinforcing elements of said at least one second reinforcing layer are made of metal, preferably of steel, more preferably preferably are steel cords.

Preferably, said reinforcing element comprises at least one elementary metal wire having small diameter, i.e. a diameter in the range of from about 0.05 mm to about 0.20 mm, more preferably of from about 0.08 mm to about 0.15 mm.

The Applicant has found that the use of elementary metal wires having a small diameter allows to obtain a reinforcing layer having both a high strength which is typical of the reinforcing layers comprising metal reinforcing elements and a high flexibility which is typical of the reinforcing layers comprising textile reinforcing elements.

Preferably, said at least one elementary metal wire is preformed.

In one embodiment, the preformed elementary metal wire is preformed in a plane.

Preferably, said elementary metal wire is preformed so that it assumes a wave-shaped configuration so that it is substantially devoid of sharp edges and/or discontinuities in curvature along their longitudinal extension. Said feature is particularly advantageous since the absence of said sharp edges results in a favourable increasing of the breaking load of the elementary metal wire.

Particularly preferred is a preforming according to substantially sinusoidal undulations. Preferably, said sinusoidal undulations have a wavelength of from about 2.5 mm to about 30 mm, and more preferably of from about 5 mm to about 25 mm. Preferably, said sinusoidal undulations have a wave amplitude of from about 0.12 mm to about 1 mm. The wavelength and wave amplitude ranges referred to above may be measured directly on the non-rubberized elementary metal wire before it is inserted into the tire or on the finished (vulcanized) tire. Advantageously, the measurement of said parameters may be performed on the elementary metal wire by using a magnifying lens and a graduated scale (for example, a graduated ruler). In the case where a finished (or vulcanized) tire is to be analysed, it is necessary to extract the reinforcing layer from the tire and to remove the rubberizing compound therefrom by using suitable solvents, for example by treating it with dichlorobenzene at about 100°C for at least 12 hours.

In an alternative embodiment, the elementary metal wire is not preformed in a plane but, for example, is helically preformed.

In order to obtain said preformed elementary metal wire, it is possible to use any one of the methods known in the sector. For example, it is possible to use toothed-wheel devices of the type illustrated in United States Patent US 5,581,990, or to use the device described in International Patent Application WO 00/39385.

According to a further preferred embodiment, said bead structure comprises at least two axially superimposed second reinforcing layers.

According to a further preferred embodiment, the distance W1 from the end portion of the turned up carcass ply and the axially inner carcass ply, measured in a direction passing through the end portion of the turned up carcass ply and being perpendicular thereto, satisfies the following relation:

$$W1 = t \times W$$

wherein t is a number ranging from about 0.60 to about 0.80, preferably from about 0.65 to about 0.75, and W is the distance from the end portion of the turned up carcass ply and the axially outer surface of the tire, measured in a direction passing through the end portion of the turned up carcass ply and being perpendicular thereto.

As reported above, the distance W1 as defined by the above relation and values, corresponds to shift inward, on the axially inner direction, said turned up carcass ply. The Applicant has found that this inward shifting allows to move said turned up carcass ply in a position wherein the bending deformations to which the tire bead area is subjected during running of the tire are lower, with a consequent reduction of the amplitude of the strain cycles to which the end portion of the turned up carcass ply and the neighborhood thereof are subjected. The amplitude reduction of the strain cycles is also advantageous to counteract heat buildup in the bead area.

According to a further preferred embodiment, said bead structure comprises a first stiffener placed between said at least one bead filler and said turned up carcass ply.

According to a further preferred embodiment, said bead structure comprises a second stiffener placed in an axially outer position with respect to said first stiffener between said turned up carcass ply and said at least one second reinforcing layer. Additionally, a portion of said second stiffener may be placed between said turned up carcass ply and said at least one first reinforcing layer.

According to a further preferred embodiment, said bead structure comprises a third stiffener placed in an axially outer position with respect to said at least one second reinforcing layer.

According to one preferred embodiment, said stiffeners comprise a crosslinked elastomeric material having a Shore A hardness ranging from about 60 to about 80, preferably from about 65 to about 75.

Said Shore A hardness has been determined according to ASTM Standard D2240-00.

The Applicant has found that the presence of said stiffeners allows to reduce or even to avoid undesired zones of concentration of stresses in the bead area, in particular at the end portion of the turned up carcass ply and at the neighbourhood thereof, i.e. allows to distribute the stresses on the whole bead area. Moreover, the Applicant has also found that the presence of said stiffeners allows to reduce the amplitude of the strain cycles to which the end portion of the turned up carcass ply and the neighbourhood thereof are subjected during running of the tire. The amplitude reduction of the strain cycles is also advantageous to counteract heat build-up in the bead area.

## Brief description of the drawings

Additional features and advantages of the invention will be better apparent from the following description of some preferred embodiments of a tire according to the present invention, which description is made, by way of non-limiting example, with reference to the attached Fig. 1-6 wherein:

- Fig. 1 is a view in cross-section of a portion of a tire according to one embodiment of the present invention;
- Fig. 2 is an enlarged view in cross-section of a bead structure of the tire of Fig. 1;
- Fig. 3 is an enlarged view in cross-section of a bead structure of the tire of Fig. 1 wherein some heights are indicated;
- Fig. 4 is an enlarged view in cross-section of a bead core and turned up carcass ply of the tire of Fig. 1 wherein the particular shape of the turned up carcass ply has been indicated;
- Fig. 5 is an enlarged view in cross-section of a bead structure of the tire of Fig. 1 wherein some thicknesses are indicated;
- Fig. 6 is a side view showing the reinforcing layers in a bead portion of a tire according to one embodiment of the present invention.

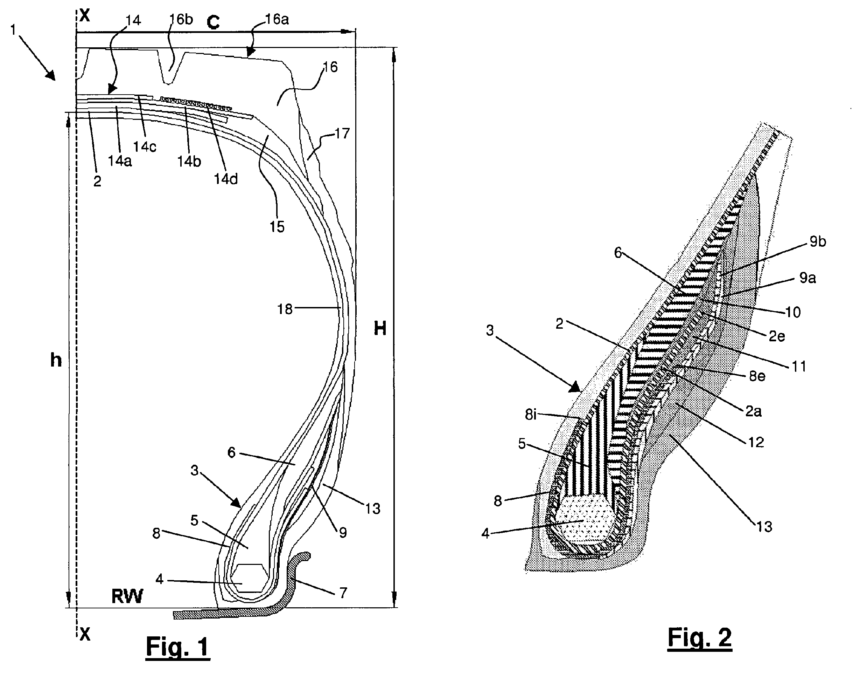

It has to be intended that in Fig. 1-6, the same reference numbers, as well as the same reference letters, have the same meanings.

## Detailed description of preferred embodiments

For simplicity, Fig. 1 shows only a portion of the tire, the remaining portion not represented being identical and symmetrically arranged with respect to the equatorial plane X-X of the tire.

The tire 1 comprises at least one carcass ply 2, the opposite lateral edges of which are associated with respective bead structures 3 comprising a bead core 4 and two bead fillers 5 and 6. In other embodiments which are not shown in the drawings there is provided only one bead filler. The association between said carcass ply 2 and said bead structure 3 is achieved by turning back the opposite lateral edges of said carcass ply 2 around said bead core 4 and said two bead fillers 5 and 6 so as to form the turned up carcass ply 2a as better represented in Fig. 2. In Fig. 2, the end portion of said carcass ply 2a has been indicated by 2e.

The carcass ply 2 generally comprises a plurality of reinforcing elements arranged parallel to each other and at least partially coated with a layer of a crosslinked elastomeric material. These reinforcing elements, in particular in case of heavy load vehicle tires, are usually made of steel wires stranded together, coated with a metal alloy such as, for example, copper/zinc, zinc/manganese, zinc/molybdenum/cobalt alloys, or mixtures thereof, and the like. Textile fibres such as, for example, rayon, nylon, or polyethylene terephthalate, or mixtures thereof, may be used for different types of tires.

The carcass ply 2 is usually of radial type, i.e. it incorporates reinforcing elements arranged in a substantially perpendicular direction relative to a circumferential direction.

A belt structure 14 is applied in a radially outer position with respect to said at least one carcass ply 2. In the particular embodiment of Fig. 1, the belt structure 14 comprises three belt layers 14a, 14b and 14c, which are radially superimposed and which incorporate a plurality of reinforcing elements, typically metal cords, said reinforcing elements being parallel to each other in each layer and intersecting with respect to the adjacent layer, inclined preferably in a symmetrical manner with respect to the equatorial plane X-X of the tire at an angle of from 10° to 70°, preferably of from 12° to 40°, and coated with a crosslinked elastomeric material.

Preferably, said reinforcing elements have a density of from 30 cords/dm to 80 cords/dm, preferably of from 40 cords/dm to 65 cords/dm, measured on said three belt layers 14a, 14b and 14c, in a circumferential direction, close to the equatorial plane X-X of the tire 1.

Said belt layer 14c may act as a protection layer from stones or gravel possibly entrapped into the tread grooves and which may cause damages to the belt structure 14 and even to the carcass ply 2.

According to the particular embodiment of Fig. 1, the belt structure 14 further comprises a lateral reinforcing layer 14d, commonly known as "zero-degree reinforcing layer", radially superimposed on the carcass ply 2. Said lateral reinforcing layer generally incorporates a plurality of reinforcing elements, typically metal cords with a breakage elongation value of from 3.0% to 10%, preferably of from 3.5% to 7.0%, said reinforcing elements being oriented in a substantially circumferential direction, thus forming an angle of a few degrees (e.g., an angle of from 0° to 5°) with respect to the equatorial plane X-X of the tire, and coated with a crosslinked elastomeric material. Preferably, said reinforcing elements have a density of from 30 cords/dm to 80 cords/dm, preferably of from 40 cords/dm to 60 cords/dm, measured on said lateral reinforcing layer, in a circumferential direction, close to the equatorial plane X-X of the tire.

In the particular embodiment of Fig. 1, an insert 15 comprising a crosslinked elastomeric material is located at the buttress area, i.e. the area where the lateral edges of the tread band 16 is connected to the sidewall 17. Usually, the insert 15 is interposed between the carcass ply 2, the belt structure 14 and the sidewall 17. A sidewall 17 is applied externally onto the carcass ply 2, this sidewall extending, in an axially outer position, from the bead structure 3 to the lateral edge of the tread band 16.

A tread band 16, whose lateral edges are connected to the sidewall 17, is applied in a radially outer position with respect to said belt structure 14. Externally, the tread band 16 has a rolling surface 16a designed to come into contact with the ground. Circumferential grooves 16b which are connected by transverse notches (not represented in Fig. 1) so as to define a tread pattern which comprises a plurality of blocks of various shapes and sizes distributed over the rolling surface 16a are generally made in this surface 16a.

In the particular embodiment of Fig. 1, a rubber layer 18, generally known as a liner, which provides the necessary impermeability to the inflation air of the tire, is provided in a radially inner position with respect to said carcass ply 2.

In the case of tube type tires, an innertube which provides the necessary impermeability to the inflation air of the tire, may be provided in a radially inner position with respect to said rubber layer 18 (not represented in Fig. 1).

Preferably, the tire 1 according to the present invention has an aspect ratio (H/C) higher than or equal to about 0.7, preferably higher than or equal to about 0.9, more preferably equal to about 1.0.

Said aspect ratio is the ratio of the tire cross-section height H, i.e. the radial distance from the tire nominal rim diameter RW to the outer diameter of the tire at its equatorial plane, divided by the tire cross-section width C, i.e. the maximum linear distance parallel to the tire rotation axis between the outer surfaces of the sidewalls (the above dimensions are determined according to the ETRTO Standard (2006), pg. 4-5).

With reference to Fig. 2, as above reported, the Applicant has found that in order to reduce the concentration of stresses, as well as the amplitude of the strain cycles, in particular at the end portion 2e of the turned up carcass ply 2a, said end portion 2e should be placed at a height h1 which satisfies the following conditions:

$$h1 = c1 \times h$$

wherein c1 is a number ranging from about 0.15 to about 0.50, preferably from about 0.20 to about 0.30, and h is the radial distance, measured at the tire equatorial plane, from the tire nominal rim diameter RW to said at least one carcass ply. The value of h should-be evaluated, when the tire is mounted on the rim and-inflated at nominal pressure.

The Applicant has also found that the height h1 as defined by the above relation and values, allows to reduce the residual loads at the end portion 2e of the turned up carcass ply 2a.

In the particular embodiment of Fig. 1 and Fig. 2, a bead structure 3 comprising a bead core 4, a first bead filler 5 and a second bead filler 6, is defined along an inner circumferential edge of the tire 1, with which the tire engages on a rim 7 (partially represented in Fig. 1) forming part of a vehicle wheel. The bead fillers 5 and 6 are usually made of a crosslinked elastomeric material.

Preferably, said first bead filler 5 comprises a crosslinked elastomeric material which is harder with respect to the crosslinked elastomeric material of said second bead filler 6.

Preferably, said first bead filler 5 comprises a crosslinked elastomeric material having a Shore A hardness ranging from about 75 to about 95, more preferably from about 80 to about 90.

Preferably, said second bead filler 6 comprises a crosslinked elastomeric material having a Shore A hardness ranging from about 50 to about 70, more preferably from 55 to 65.

A first reinforcing layer, i.e. a flipper, 8 is wound around the turned up carcass ply 2a so as to partially envelope said bead core 4, said first bead filler 5 and said second bead filler 6.

In the particular embodiment of Fig. 1 and Fig. 2, the axially inner end of said flipper 8 is placed at a lower height with respect to its axially outer end. Moreover, the axially outer end of said flipper 8 is placed at a lower height with respect to said end portion 2e of said turned up carcass ply 2a.

The axially inner end of said flipper 8 has been indicated by 8i (see Fig. 2); similarly, the axially outer end of said flipper 8 has been indicated by 8e (see Fig. 2). Alternatively, the axially inner end 8i of said flipper 8 may be placed at a higher height with respect to its axially outer end 8e (not represented in Fig. 1 and in Fig. 2)

Alternatively, the axially inner end 8i and the axially outer end 8e of said flipper 8 may be placed at the same height (not represented in Fig. 1 and in Fig. 2).

As mentioned above, said flipper 8 comprises a plurality of reinforcing elements having a stiffness, measured on rubberized and vulcanized reinforcing elements, higher than or equal to about 100 tsu, preferably of from about 120 tsu to about 200 tsu.

Preferably, the reinforcing element of said flipper 8 are made of metal, preferably of steel. More preferably, said reinforcing elements are steel cords comprising at least one elementary metal wire. Said elementary metal wire is preferably made of steel. Any kind of steel (NT, HT, SHT, UHT) may be used. Generally, the breaking strength of a standard NT (normal tensile) steel ranges from about 2600 N/mm$^2$ (or 2600 MPa - MegaPascal) to about 3200 N/mm$^2$, the breaking strength of a HT (High Tensile) steel ranges from about 3000 N/mm$^2$ to about 3600 N/mm$^2$, the breaking strength of a SHT (Super High Tensile) steel ranges from about 3300 N/mm$^2$ to about 3900 N/mm$^2$, the breaking strength of a UHT (Ultra High Tensile) steel ranges from about 3600 N/mm$^2$ to about 4200 N/mm$^2$. Said breaking strength values depend in particular on the quantity of carbon contained in the steel.

Generally, said elementary metal wire is coated with a metal alloy such as, for example, copper/zinc, zinc/manganese, zinc/molybdenum/cobalt alloys, or mixtures thereof, and the like.

Preferably, the density of the reinforcing elements in said flipper 8 is of from about 30 cords/dm to about 100 cords/dm, more preferably of from about 40 cords/dm to about 80 cords/dm.

Preferably, the reinforcing elements of said flipper 8 are disposed parallel to one another and are inclined, with respect to the reinforcing elements of said carcass ply 2, with an inclination angle of from about 10° to about 45°, preferably of from about 15° to about 35°.

Preferably, the thickness of said flipper 8, i.e. the total thickness including the diameter of the reinforcing elements and the elastomeric material into which the reinforcing elements are embedded, is of from about 1.0 mm to about 3.5 mm, preferably of from about 1.5 mm to about 3.0 mm.

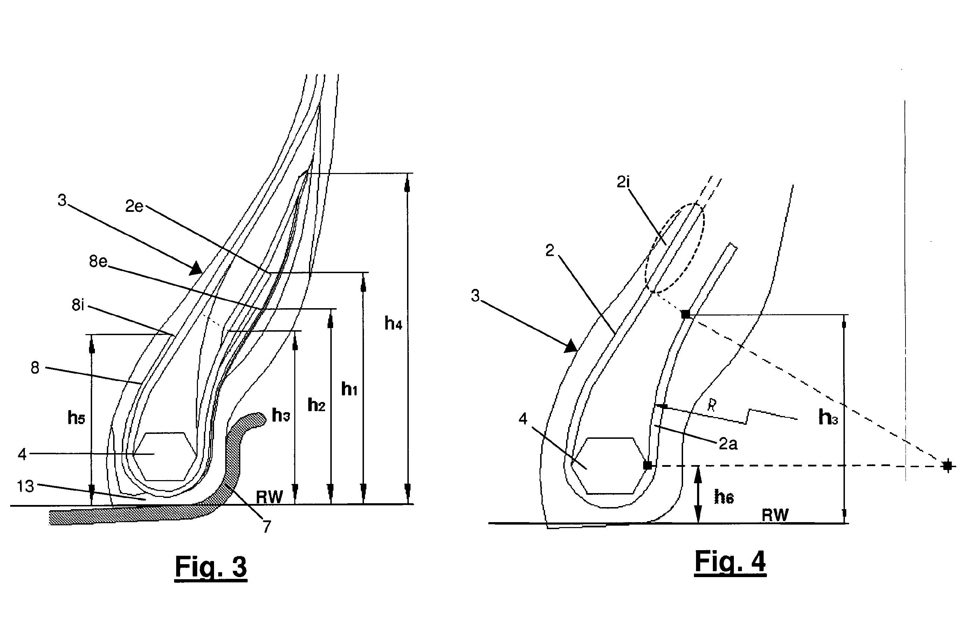

In a preferred embodiment of the tire according to the present invention, with reference to Fig. 3, a height h2 of the axially outer end 8e of said flipper 8 and said height h1 may satisfy the following relation:

$$h2 = c2 \times h1$$

wherein c2 is a number ranging from about 0.70 to about 0.95, preferably from about 0.75 to about 0.90 and h1 is as defined above.

A height h5 of the axially inner end 8i of the said flipper 8 and said height h1 may satisfy the following relation:

$$h5 = c5 \times h1$$

wherein c5 is a number of from about 0.65 to about 0.85, preferably of from about 0.70 to about 0.80 and h1 is as defined above.

As reported above, at least one second reinforcing layer is placed in an axially outer position with respect to said at least one reinforcing layer, i.e. said flipper 8.

In the particular embodiment of Fig. 1, two second reinforcing layers 9, axially superimposed, are represented. As better represented in Fig. 2, an axially inner second reinforcing layer 9b and an axially outer second reinforcing layer 9a are placed in an axially outer position with respect to said flipper 8.

As mentioned above, said second reinforcing layers 9a and 9b comprise a plurality of reinforcing elements having a stiffness, measured on rubberized and vulcanized reinforcing elements, higher than or equal to about 1 tsu, preferably of from about 3 tsu to about 25 tsu.

Preferably, the reinforcing elements of said second reinforcing layers 9a and 9b are made of textile materials such as, for example, nylon, aramide, rayon, or mixtures thereof, or of metal such as, for example, steel, preferably of textile materials, more preferably of nylon.

Alternatively, as mentioned above, the reinforcing elements of said second reinforcing layers 9a and 9b are made of metal, preferably of steel, more preferably are steel cords. Preferably, said reinforcing element comprises at least one elementary metal wire having a small diameter, i.e. a diameter in the range of from 0.05 mm to 0.20 mm, more preferably of from 0.08 mm to 0.15 mm. Preferably, said at least one elementary metal wire is preformed. Any kind of steel (NT, HT, SHT, UHT) may be used. Generally, said elementary metal wire is coated with a metal alloy such as, for example, copper/zinc, zinc/manganese, zinc/molybdenum/cobalt alloys, or mixtures thereof, and the like.

Preferably, the density of the reinforcing elements in said second reinforcing layers 9a and 9b is of from about 40 cords/dm to about 160 cords/dm, more preferably of from about 50 cords/dm to about 120 cords/dm.

Preferably, the reinforcing elements of said second reinforcing layers 9a and 9b are disposed parallel to one another and are inclined, with respect to the reinforcing element of said carcass ply 2, with an inclination angle of from about 10° to about 45°, preferably of from about 15° to about 35°.

Preferably, the reinforcing elements of said axially inner second reinforcing layer 9b are disposed at an inclination angle having the same inclination of the inclination angle of said flipper 8.

Preferably, the reinforcing elements of said axially outer second reinforcing layer 9a are disposed at an inclination angle having an opposite inclination with respect to the inclination angle of said flipper 8.

Preferably, said reinforcing elements are disposed in said axially outer second reinforcing layer 9a and said axially inner second reinforcing layer 9b at opposite inclination angles.

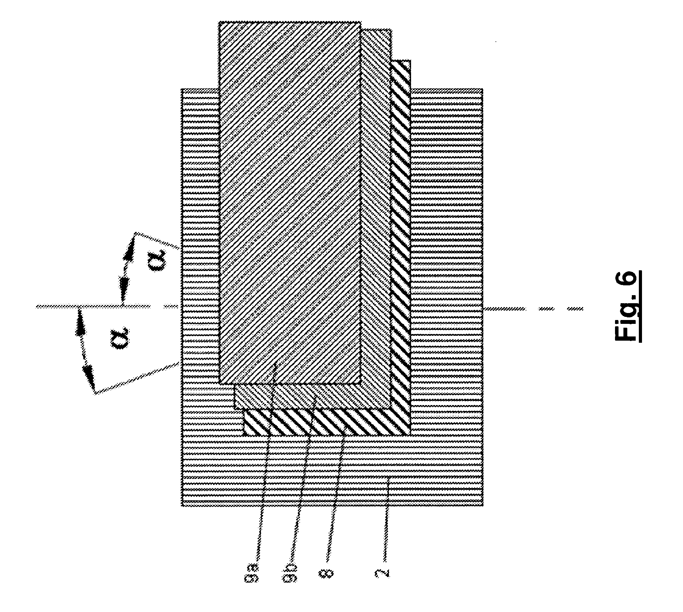

Fig. 6 schematically shows the superimposed layers, i.e. the carcass ply 2a, the flipper 8, the axially inner second reinforcing layer 9b, the axially outer second reinforcing layer 9b, as well as the inclination angle $\alpha$, in a tire bead portion according to the above.

Preferably, the thickness of each one of said second reinforcing layers 9a and 9b, i.e. the total thickness including the diameter of the reinforcing elements and the elastomeric material into which the reinforcing elements are embedded, is of from about 0.5 mm to about 2.0 mm, preferably of from about 0.8 mm to about 1.8 mm.

It has to be noted that said second reinforcing layers 9a and 9b may have the same or different characteristics, said characteristics being selected from those above reported.

In a preferred embodiment of the tire according to the present invention, with reference to Fig. 3, a height h4 of at least one of said two second reinforcing layers 9a and 9b and a height h may satisfy the following relation:

$$h4 = c4 \times h$$

wherein c4 is a number ranging from about 0.30 to about 0.50, preferably from about 0.35 to about 0.45, and h (not represented in Fig. 3) is as defined above.

An antiabrasive layer 13 which is the outermost layer of the bead structure 3 is also represented in Fig. 1 and in Fig. 2.

Preferably, said antiabrasive layer 13 comprises a crosslinked elastomeric material having a Shore A hardness ranging from about 60 to about 90, preferably from about 65 to about 80.

Said Shore A hardness has been determined according to ASTM Standard D2240-00.

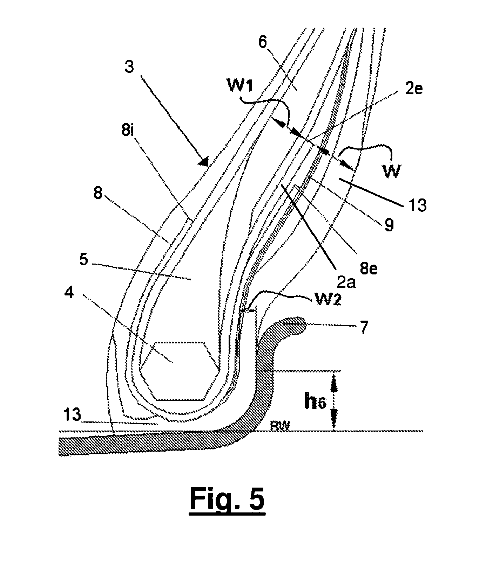

As reported above, said antiabrasive layer 13 has a portion placed in an axially outermost position of a bead structure portion designed to be in contact with the rim having a thickness W2 higher than or equal to about 3.5 mm, preferably of from about 4.0 mm to about 6.0 mm. Said thickness W2 may be measured in an axial direction passing through the axially outermost point of the bead core (see Fig. 5 wherein said axially outermost point is placed at a height h6).

The Applicant has found that said thickness W2 allows to obtain a bead structure which is able to better withstand the bending deformations to which the tire is subjected during running, in particular under the action of very large loads.

A first stiffener 10 is placed between said second bead filler 6 and said turned up carcass ply 2a.

In the particular embodiment of Fig. 1, a radially inner portion of said first stiffener 10 is placed between said second bead filler 6 and said turned up carcass ply 2a. A radially outer portion of said first stiffener 10 is placed in a radially outer position with respect to the end portion 2e of said turned up carcass ply 2a, substantially adjacent to said second bead filler 6. Said radially outer portion of said first stiffener 10 preferably ends in proximity of the radially outer ends of said two second reinforcing layers 9a and 9b. Preferably, said first stiffener 10 has a maximum thickness ranging from about 0.5 mm to about 3.0 mm, more preferably from about 1.0 mm and about 2.0 mm.

A second stiffener 11 is placed in an axially outer position with respect to said first stiffener 10 between said turned up carcass ply 2a and said two second reinforcing layers 9a and 9b.

In the particular embodiment of Fig. 1 and 2, said second stiffener 11 has a radially inner portion placed between said turned up carcass ply 2a and the axially outer end 8e of said flipper 8; an intermediate portion placed between said turned up carcass ply 2a and said two second reinforcing layers 9a and 9b; a radially outer portion placed between the radially outer portion of said first stiffener 10 and said two second reinforcing layers 9a and 9b. Preferably, said second stiffener 11 has a maximum thickness ranging from about 0.5 to about 3.0 mm, more preferably from about 1.0 mm to about 2.0 mm.

A third stiffener 12 is placed in an axially outer position with respect to said two second reinforcing layers 9a and 9b.

In the particular embodiment of Fig. 1 and Fig. 2, said third stiffener 12 has a radially inner portion placed at a height substantially corresponding to the height of the flange of the rim 7 and a radially outer portion joining the radially outer portion of said first stiffener 10. Preferably, said third stiffener 12 has a maximum thickness ranging from about 1.0 mm to about 7.0 mm, more preferably from about 3.0 mm to about 5.0 mm.

The Applicant has found that the presence of said stiffeners 10, 11 and 12, allows to reduce or even avoid undesired zones of concentration of stresses in the bead area, in particular at the end portion of the turned up carcass ply and at the neighbourhood thereof, i.e. allows to distribute the stresses on the whole bead area. Moreover, the Applicant has also found that the presence of said stiffeners allows to reduce the amplitude of the strain cycles to which the end portion of the turned up carcass ply and the neighbourhood thereof are subjected during running of the tire. The amplitude reduction of strain cycles is also advantageous to counteract heat build-up in the bead area.

The Applicant has also found that, beside a particular height h1 above reported, a particular shape of said turned up carcass ply 2a may be advantageously used in preferred embodiments of the tire according to the present invention.

To this end, having now reference to Fig. 4, a preferred shape of said turned up carcass ply 2a comprises an arc portion and a substantially straight portion.

Preferably, said arc portion starts at the height h6 of the axially outermost point of the bead core.

Preferably, said arc portion has a radius R ranging from about 60 mm to about 100 mm, more preferably from about 65 mm to about 80 mm.

Preferably, said substantially straight portion is substantially parallel to the axially inner carcass ply portion 2i which is faced thereto.

Preferably, in the point which connects said arc portion to said substantially straight portion, said arc portion is tangent to the straight line defined by the extension of said substantially straight portion.

Preferably said substantially straight portion starts at a height h3, said height h3 being preferably related to said height h1 so as to satisfy the following relation:

$$h3 = c3 \times h1$$

wherein c3 is a number ranging from about 0.60 to about 0.85, preferably from about 0.70 to about 0.80 and h1 is as defined above.

The Applicant has found that both said height h1 and the above described shape of the turned up carcass ply 2a allow to shift inward, on the axially inner direction, said turned up carcass ply with a consequent lowering of the thickness of the bead filler (i.e. the second bead filler 6 according to Fig. 1 and Fig. 2), in particular in the region substantially near to the end portion 2e of the turned up carcass ply 2a. In this way, the turned up carcass ply 2a is moved in a position wherein the bending deformations to which the tire bead area is subjected during running of the tire are lower, with a consequent reduction of the strain cycles amplitude. The amplitude reduction of the strain cycles is also advantageous to counteract heat build-up in the bead area.

Having now reference to Fig. 5, according to one preferred embodiment of the present invention, the distance W1 from the end portion 2e of the turned up carcass ply 2a and the axially inner carcass ply, measured in a direction passing through the end portion 2e of the turned up carcass ply 2a and being perpendicular thereto, satisfies the following relation:

$$W1 = t \times W$$

wherein t is a number ranging from about 0.60 to about 0.80, preferably from about 0.65 to about 0.75 and W is the distance from the end portion 2e of the turned up carcass ply 2a and the axially outer surface of the tire, measured in a direction passing through the end portion 2e of the turned up carcass ply 2a and being perpendicular thereto.

The distance W1 as defined by the above relation and values, corresponds to shift inward, on the axially inner direction, said turned up carcass ply 2a with a consequent lowering of the thickness of the bead filler (i.e. the second bead filler 6), in particular in the region substantially near to the end portion 2e of the turned up carcass ply 2a. The Applicant has found that this inward shifting allows to move said turned up carcass ply 2a in a position wherein the bending deformations to which the tire bead area is subjected during running of the tire are lower, with a consequent reduction of the amplitude of the strain cycles to which the end portion 2e of the turned up carcass ply 2a and the neighbourhood thereof are subjected. The amplitude reduction of the strain cycles is also advantageous to counteract heat build-up in the bead area.

The present invention will be further illustrated below by means of an illustrative example, which is given for purely indicative purposes and without any limitation of this invention.

EXAMPLE 1

Two typologies of tires (Tire 1 and Tire 2), having size 12/00 R20, were manufactured.

Tire 1 and Tire 2 have identical structural elements (as represented in Fig. 1), i.e. identical carcass (one carcass ply), two crossed belt plies (a radially inner belt ply and a radially outer belt ply), a further belt layer (which is radially superimposed on the radially outer belt ply and interposed between the two zero-degree reinforcing layers), two zero-degree reinforcing layers radially superimposed on said radially outer belt ply, identical tread band.

Tire 1 (comparative) comprises a bead structure having: a bead core, two bead fillers, a flipper, three stiffeners, an antiabrasive layer.

Tire 2 (invention) comprises a bead structure having (as represented in Fig. 1 and Fig. 2): a bead core, two bead fillers, a flipper, two axially superimposed second reinforcing layers, three stiffeners, an antiabrasive layer.

The bead structures of Tire 1 (comparative) and of Tire 2 (invention) also differ for the characteristics given in Table 1.

TABLE 1

| Tire | W1 | h1 | W2 |
|------|------|------|------|
| 1 (*) | 14.9 | 65.0 | 3.60 |
| 2 | 11.0 | 72.0 | 6.20 |
| (*): comparative. | | | |

Indoor tests were carried out on two Tire 1 (comparative) and two Tire 2 (invention) so that an average value of the tests results could be calculated.

Tire bead fatigue stress test

The tires were mounted on a 9.00" wheel rim and inflated at a pressure of 135 psi (9.5 bar). The tires were subjected to a load of 9000 kgf, i.e. to an overload of 240% with respect to the tire load capacity. Successively the tires were rotated on a road wheel at a fixed and controlled speed of 20 km/h. The test was stopped when the tires came to a failure and the time, at which the tire failure occurred, was detected.

The results were reported in Table 2, giving to the Tire 1 (comparative) a value 100. Such a result shows that Tire 2 (invention) provides a better geometrical stability and an increased bead integrity during use in comparison with Tire 1 (comparative).

TABLE 2

| Tire 1 (*) | 100 |
|------|------|
| Tire 2 | 150 |
| (*): comparative. | |

**Claims**

1. Tire (1) comprising:

   - a pair of bead structures (3), said bead structures (3) comprising at least one bead core (4) and at least one bead filler (5, 6);
   - a carcass structure comprising at least one carcass ply (2) extending between said bead structures (3), the opposite lateral edges of said carcass ply (2) being turned up around said bead cores (4);
   - a belt structure (14) applied in a radially outer position with respect to said carcass structure;
   - a tread band (16) applied in a radially outer position with respect to said belt structure (14);
   - a pair of sidewalls (17), each sidewall (17) being applied laterally on opposite sides with respect to said carcass structure; each one of said pair of bead structures (3) comprising
   - at least one first reinforcing layer (8) which is wound around said turned up carcass ply (2a) so as to at least partially envelope said bead core (4) and said bead filler (5, 6);
   - at least one second reinforcing layer (9) placed in an axially outer position with respect to said at least one first reinforcing layer (8);
   - at least one antiabrasive layer portion (13) placed in an axially outermost position of a bead structure (3) portion designed to be in contact with the rim (7);
   wherein:
   - the end portion (2e) of said turned up carcass ply (2a) is placed at a height (h1) which satisfies the following relation:

$$h1 = c1 \times h$$

wherein $c_1$ is a number ranging from about 0.15 to about 0.50 and wherein h is the radial distance, measured at the tire equatorial plane, from a tire nominal rim diameter to said at least one carcass ply,

**characterized in that** said at least one antiabrasive layer portion (13) has a thickness higher than or equal to about 3.5 mm, said thickness being measured in correspondence of the bead core.

2. Tire (1) according to claim 1, wherein said thickness is of from about 4.0 mm to about 7.0 mm.

3. Tire (1) according to claim 1 or 2, wherein $c_1$ is a number ranging from about 0.20 to about 0.30.

4. Tire (1) according to any one of the preceding claims, wherein said tire (1) is a heavy load vehicle tire.

5. Tire (1) according to any one of the preceding claims, wherein said tire (1) is a tube type tire.

6. Tire (1) according to any one of the preceding claims, wherein said at least one first reinforcing layer (8) comprises a plurality of reinforcing elements having a stiffness, measured on rubberized and vulcanized reinforcing elements, higher than or equal to about 100 tsu.

7. Tire (1) according to claim 6, wherein said reinforcing elements are made of metal, preferably steel.

8. Tire (1) according to any one of the preceding claims, wherein said at least one second reinforcing layer (9) comprises a plurality of reinforcing elements having a stiffness, measured on rubberized and vulcanized reinforcing elements, higher than or equal to about 1 tsu.

9. Tire (1) according to claim 8, wherein said reinforcing elements are made of textile materials such as nylon, aramide, rayon, or mixtures thereof.

10. Tire (1) according to claim 8, wherein said reinforcing element comprises at least one elementary metal, preferably steel, wire having a diameter in the range of from about 0.05 mm to about 0.20 mm.

11. Tire (1) according to claim 10, wherein said elementary metal wire is preformed.

12. Tire (1) according to any one of the preceding claims, wherein said bead structure (3) comprises at least two axially superimposed second reinforcing layers (9).

13. Tire (1) according to any one of the preceding claims, wherein a distance (W1) from the end portion (2e) of the turned up carcass ply (2a) and the axially inner carcass ply (2i), measured in a direction passing through the end portion (2e) of the turned up carcass ply (2a) and being perpendicular thereto, satisfies the following relation:

$$W1 = t \times W$$

wherein t is a number ranging from about 0.60 to about 0.80 and wherein W is a distance from the end portion (2e) of the turned up carcass ply (2a) and the axially outer surface of the tire, measured in a direction passing through the end portion (2e) of the turned up carcass ply (2a) and being perpendicular thereto.

14. Tire (1) according to any one of the preceding claims, wherein said bead structure (3) comprises a first stiffener (10) placed between said at least one bead filler (5, 6) and said turned up carcass ply (2a).

15. Tire (1) according to any one of the preceding claims, wherein said bead structure (3) comprises a second stiffener (11) placed in an axially outer position with respect to said first stiffener (10) between said turned up carcass ply (2a) and said at least one second reinforcing layer (9).

16. Tire (1) according to any one of the preceding claims, wherein said bead structure (3) comprises a third stiffener (12) placed in an axially outer position with respect to said at least one second reinforcing layer (9).

**Patentansprüche**

1. Reifen (1) mit:

- einem Paar Wulststrukturen (3), wobei diese Wulststrukturen (3) wenigstens einen Wulstkern (4) und wenigstens einen Wulstfüller (5, 6) aufweisen,
- einer Karkassenstruktur mit wenigstens einer Karkassenlage (2), die sich zwischen den Wulststrukturen (3) erstreckt, wobei die gegenüberliegenden seitlichen Kanten der Karkassenlage (2) um die Wulstkerne (4) umgekantet sind,
- einer Gürtelstruktur (14), die an einer im Bezug auf die Karkassenstruktur radial äußeren Position aufgebracht ist,
- einer Lauffläche (16), die an einer im Bezug auf die Gürtelstruktur (14) radial äußeren Position aufgebracht ist,

- einem Paar Seitenwände (17), wobei jede Seitenwand (17) mit Bezug auf die Karkassenstruktur seitlich an gegenüberliegenden Seiten aufgebracht ist,

wobei jede einzelne des Paars Wulststrukturen (3) aufweist:

- wenigstens eine Verstärkungsschicht (8), die um die umgekantete Karkassenlage (2a) so herumgewickelt ist, dass sie wenigstens teilweise den Wulstkern (4) und den Wulstfüller (5, 6) einhüllt,

- wenigstens eine zweite Verstärkungsschicht (9), die an einer im Bezug auf die wenigstens eine erste Verstärkungsschicht (8) axial äußeren Position angeordnet ist,

- wenigstens einen Antiabriebschichtabschnitt (13), der an einer axial am weitesten äußeren Position eines Wulststruktur-(3)-Abschnitts angeordnet ist, der dafür gestaltet ist, um in Kontakt mit der Felge (7) zu stehen,

wobei:

- der Endabschnitt (2e) der umgekanteten Karkassenlage (2a) in einer Höhe (h1) angeordnet ist, welche die folgende Beziehung erfüllt:

$$h1 = c1 \times h$$

wobei c1 eine Zahl im Bereich von ungefähr 0,15 bis ungefähr 0,50 ist und wobei h der radiale Abstand, gemessen in der Reifenäquatorialebene, von einem Reifennennfelgendurchmesser bis zu der wenigstens einen Karkassenlage ist, **dadurch gekennzeichnet, dass** der wenigstens eine Antiabriebschichtabschnitt (13) eine Dicke aufweist, die größer oder gleich ungefähr 3,5 mm ist, wobei die Dicke entsprechend dem Wulstkern gemessen wird.

2. Reifen (1) nach Anspruch 1, bei dem die Dicke zwischen ungefähr 4,0 mm und ungefähr 7,0 mm liegt.

3. Reifen (1) nach Anspruch 1 oder 2, bei dem c1 eine Zahl ist, die zwischen ungefähr 0,20 und ungefähr 0,30 liegt.

4. Reifen (1) nach einem der vorherigen Ansprüche, wobei der Reifen (1) ein Lastkraftwagenreifen ist.

5. Reifen nach einem der vorherigen Ansprüche, wobei der Reifen (1) ein Schlauchreifen ist.

6. Reifen (1) nach einem der vorherigen Ansprüche, bei dem die wenigstens eine erste Verstärkungsschicht (8) mehrere Verstärkungselemente aufweist, die eine Festigkeit, gemessen an gummierten und vulkanisierten Verstärkungselementen, von größer oder gleich ungefähr 100 tsu aufweisen.

7. Reifen (1) nach Anspruch 6, bei dem die Verstärkungselemente aus Metall, vorzugsweise Stahl, hergestellt sind.

8. Reifen (1) nach einem der vorherigen Ansprüche, bei dem die wenigstens eine zweite Verstärkungsschicht (9) mehrere Verstärkungselemente aufweist, die eine Festigkeit, gemessen an gummierten und vulkanisierten Verstärkungselementen, von größer oder gleich ungefähr 1 tsu aufweisen.

9. Reifen (1) nach Anspruch 8, bei dem die Verstärkungselemente aus Textilmaterialien wie z.B. Nylon, Aramid, Kunstseide oder Mischungen davon hergestellt sind.

10. Reifen (1) nach Anspruch 8, bei dem das Verstärkungselement wenigstens einen Draht aus elementarem Metall, vorzugsweise Stahl, aufweist, der einen Durchmesser im Bereich von ungefähr 0,05 mm bis ungefähr 0,20 mm aufweist.

11. Reifen (1) nach Anspruch 10, bei dem der Draht aus elementarem Metall vorgeformt ist.

12. Reifen (1) nach einem der vorherigen Ansprüche, bei dem die Wulststruktur (3) wenigstens zwei axial übereinander gelegte zweite Verstärkungsschichten (9) aufweist.

13. Reifen (1) nach einem der vorherigen Ansprüche, bei dem ein Abstand (W1) vom Endabschnitt (2e) der umgekanteten Karkassenlage (2a) und der axial inneren Karkassenlage (2i), gemessen in einer Richtung, die durch den Endabschnitt (2e) der umgekanteten Karkassenlage (2a) geht und senkrecht dazu ist, die folgende Beziehung erfüllt:

$$W1 = t \times W$$

wobei t eine Zahl ist, die im Bereich von ungefähr 0,60 bis ungefähr 0,80 liegt und wobei W ein Abstand vom Endabschnitt (2e) der umgekanteten Karkassenlage (2a) zur axial äußeren Oberfläche des Reifens wurden, der in einer Richtung gemessen ist, die durch den Endabschnitt (2e) der umgekanteten Karkassenlage (2a) geht und dazu senkrecht ist.

14. Reifen (1) nach einem der vorherigen Ansprüche, bei dem die Wulststruktur (3) eine erste Versteifung (10) aufweist, die zwischen dem wenigstens einen Wulstfüller (5, 6) und der umgekanteten Karkassenlage (2a) angeordnet ist.

**15.** Reifen (1) nach einem der vorherigen Ansprüche, bei dem die Wulststruktur (3) eine zweite Versteifung (11) aufweist, die an einer axial äußeren Position bezüglich der ersten Versteifung (10) zwischen der umgekanteten Karkassenlage (2a) und der wenigstens einen zweiten Verstärkungsschicht (9) angeordnet ist.

**16.** Reifen (1) nach einem der vorherigen Ansprüche, bei dem die Wulststruktur (3) eine dritte Versteifung (12) aufweist, die an einer im Bezug auf die wenigstens eine zweite Verstärkungsschicht (9) axial äußeren Position angeordnet ist.

**Revendications**

**1.** Pneu (1) comprenant :

- une paire de structures de talon (3), lesdites structures de talon (3) comprenant au moins une tringle de talon (4) et au moins une charge de talon (5, 6) ;
- une structure de carcasse comprenant au moins une nappe de carcasse (2) s'étendant entre lesdites structures de talon (3), les bords latéraux opposés de ladite nappe de carcasse (2) étant retournés autour desdites tringles de talon (4) ;
- une structure de ceinture (14) disposée en une position radialement externe par rapport à ladite structure de carcasse ;
- une bande de roulement (16) disposée en une position radialement externe par rapport à ladite structure de ceinture (14) ;
- une paire de parois latérales (17), chaque paroi latérale (17) étant disposée latéralement sur des cotés opposés par rapport à ladite structure de carcasse ;
chacune de ladite paire de structures de talon (3) comprenant :

- au moins une première couche de renfort (8) qui est enroulée autour de ladite nappe de carcasse retournée (2a) pour envelopper au moins partiellement ladite tringle de talon (4) et ladite charge de talon (5, 6) ;
- au moins une seconde couche de renfort (9) placée en une position axialement externe par rapport à l'au moins une première couche de renfort (8) ;
- au moins une partie de couche anti abrasive (13) placée en une position la plus externe axialement d'une partie de structure de talon (3) conformée pour être en contact avec la jante (7) ;
dans lequel :

- la partie d'extrémité (2e) de ladite nappe de carcasse retournée (2a) est placée à une hauteur (h1) qui satisfait la relation suivante :

$$h1 = c1 \times h$$

dans laquelle c1 est un nombre compris entre approximativement 0.15 et approximativement 0.50 et dans laquelle h est la distance radiale, mesurée dans le plan équatorial d'un pneu, depuis un diamètre nominal de jante de pneu jusqu'à au moins une nappe de carcasse, **caractérisé en ce que** ladite au moins une partie de couche anti abrasive (13) a une épaisseur plus grande ou égale à approximativement 3.5 mm, ladite épaisseur étant mesurée dans la direction de la tringle de talon.

**2.** Pneu selon la revendication 1, dans lequel ladite épaisseur est comprise entre approximativement 4.0 mm et approximativement 7.0 mm.

**3.** Pneu selon les revendications 1 ou 2, dans lequel c1 est un nombre compris entre approximativement 0.20 et approximativement 0.30.

**4.** Pneu selon l'une quelconque des revendications précédentes, dans lequel ledit pneu (1) est un pneu de véhicule de poids lourd.

**5.** Pneu selon l'une quelconque des revendications précédentes, dans lequel ledit pneu (1) est un pneu avec chambre à air.

**6.** Pneu selon l'une quelconque des revendications précédentes, dans lequel ladite au moins une couche de renfort (8) comprend une pluralité d'éléments de renfort ayant une rigidité, mesurée sur des éléments de renforts en caoutchouc vulcanisé, plus grande ou égale à approximativement 100 tsu.

**7.** Pneu (1) selon la revendication 6, dans lequel lesdits éléments de renfort sont fait de métal, de préférence d'acier.

**8.** Pneu selon l'une quelconque des revendications précédentes, dans lequel ladite au moins une seconde couche de renfort (9) comprend une pluralité d'éléments de renfort ayant une rigidité, mesurée sur des éléments de renforts en caoutchouc vulcanisé, plus grande ou égale à approximativement 1 tsu.

**9.** Pneu (1) selon la revendication 8, dans lequel lesdits éléments de renfort sont fait de matériaux textiles tels que nylon, aramide, rayonne, ou un de leurs mélanges.

10. Pneu (1) selon la revendication 8, dans lequel ledit élément de renfort comprend au moins un métal primaire, de préférence d'acier, de fil ayant un diamètre dans l'intervalle allant d'approximativement 0.05 nm à approximativement 0.20 mm.

11. Pneu (1) selon la revendication 10, dans lequel ledit fil de métal primaire est préformé.

12. Pneu (1) selon l'une quelconque des revendications précédentes, dans lequel ladite structure de talon (3) comprend au moins deux secondes couches de renfort (9) axialement superposées.

13. Pneu (1) selon l'une quelconque des revendications précédentes, dans lequel une distance (W1) entre la partie d'extrémité (2e) de la nappe de carcasse retournée (2a) et la nappe de carcasse axialement interne (2i), mesurée selon une direction passant par la partie d'extrémité (2e) de la nappe de carcasse retournée (2a) et lui étant perpendiculaire, satisfait la relation suivante :

$$W1 = t \times W$$

dans laquelle t est un nombre compris entre approximativement 0.60 et approximativement 0.80 et dans laquelle W est une distance depuis la partie d'extrémité (2e) de la nappe de carcasse retournée (2a) jusqu'à la surface axialement externe du pneu, mesurée selon une direction passant par la partie d'extrémité (2e) de la nappe de carcasse retournée (2a) et lui étant perpendiculaire.

14. Pneu (1) selon l'une quelconque des revendications précédentes, dans lequel ladite structure de talon (3) comprend un premier raidisseur (10) placé entre ladite au moins une charge de talon (5, 6) et ladite nappe de carcasse retournée (2a).

15. Pneu (1) selon l'une quelconque des revendications précédentes, dans lequel ladite structure de talon (3) comprend un second raidisseur (11) placé en une position axialement externe par rapport audit premier raidisseur (10) entre ladite nappe de carcasse retournée (2a) et ladite au moins une seconde couche de renfort (9).

16. Pneu (1) selon l'une quelconque des revendications précédentes, dans lequel ladite structure de talon (3) comprend un troisième raidisseur (12) placé en une position axialement externe par rapport à ladite au moins une seconde couche de renfort (9).

**Fig. 2**

**Fig. 1**

**Fig. 3**

**Fig. 4**

EP 2 205 455 B1

**Fig. 5**

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0206679 A
- US 4227563 A
- US 5433257 A
- US 4046183 A
- US 4953605 A
- US 5581990 A
- WO 0039385 A